# EUROPÄISCHE PATENTANMELDUNG

(11) **EP 4 421 325 A1**
(43) Veröffentlichungstag der Anmeldung: **28.08.2024**
(21) Anmeldenummer: 24159420.9
(22) Anmeldetag: 23.02.2024
(51) Int. Cl.: F04D 13/10, F04D 1/06, F04D 29/20, F04D 29/047, F16D 1/06

(54) **KREISELPUMPE, INSBESONDERE BOHRLOCHPUMPE**

(30) Priorität: 24.02.2023 BE 202305141
(71) Anmelder: WILO SE, 44263 Dortmund (DE)
(72) Erfinder: Kohler, Henry, 44263 Dortmund (DE); Sorge, Robert, 44263 Dortmund (DE)
(74) Vertreter: Michalski Hüttermann & Partner Patentanwälte mbB

(57) **Zusammenfassung**

Gegenstand der Erfindung ist eine Kreiselpumpe, insbesondere Bohrlochpumpe, mit einer Pumpenwelle (1), einem Laufrad (2), einer Wellenhülse (3) und einem Druckring (4), wobei das Laufrad (2), die Wellenhülse (3) und der Druckring (4) auf dem Laufrad (2) sitzen, der Druckring (4) an dem Laufrad (2) befestigt ist, und die Wellenhülse (3) und der Druckring (4) mit einem miteinander korrespondierenden Bajonettverschluss (6) ausgestaltet sind.

## Beschreibung

### Technisches Gebiet

Die Erfindung betrifft eine Kreiselpumpe, insbesondere Bohrlochpumpe, mit einer Pumpenwelle, einem Laufrad, einer Wellenhülse und einem Druckring, wobei das Laufrad, die Wellenhülse und der Druckring auf der Pumpenwelle sitzen und der Druckring an dem Laufrad befestigt ist. Die Erfindung betrifft ferner eine Bohrlochpumpe mit einer Mehrzahl axial übereinander an der Pumpenwelle angeordneten Laufrädern, Wellenhülsen und Druckringen gemäß einer Kreiselpumpe.

### Hintergrund der Erfindung

Kreiselpumpen sind aus dem Stand der Technik bekannt und dienen zum Fördern eines Fluids mittels einer Drehbewegung eines in einem Pumpengehäuse der Kreiselpumpe vorgesehenen Laufrades. Das Laufrad wird mittels einer Rotorwelle durch einen Motor der Kreiselpumpe angetrieben. Bohrlochpumpen als spezielle Ausgestaltung einer Kreiselpumpe werden regelmäßig zum Fördern von Wasser oder Erdöl als Fluid insbesondere aus unterirdischen Vorkommen verwendet. Derartige Bohrlochpumpen werden in ein Bohrloch bis zum Eintauchen in das Fluid oder in eine fluidführende Bodenschicht abgesenkt und verbleiben dort. Gegenüber einer Kreiselpumpe weisen Bohrlochpumpen in der Regel mehrere axial bzw. vertikal übereinander angeordnete Laufräder auf.

Bekannte Kreiselpumpen weisen eine Pumpenwelle, ein Laufrad, eine Wellenhülse und einen Druckring auf, wobei das Laufrad, die Wellenhülse und der Druckring auf dem Laufrad sitzen und der Druckring an dem Laufrad befestigt ist. Insbesondere bei einer kraftschlüssigen Befestigung des Laufrads besteht die Herausforderung, die Wellenhülse eines Radiallagers an der Pumpenwelle in Dreh- und in axialer Richtung zu fixieren.

Aus dem Stand der Technik ist dazu bekannt, die Wellenhülse für eine Mitnahme in Drehrichtung mittels einer Passfederverbindung und in axialer Richtung durch Verspannen mittels einer Verschraubung zu fixieren. Derartige Lösungen haben sich jedoch, wenn auch bereits seit Dekaden etabliert, als verbesserungswürdig erwiesen.

### Beschreibung der Erfindung

Ausgehend von dieser Situation ist es eine Aufgabe der vorliegenden Erfindung, eine Kreiselpumpe anzugeben, deren Laufrad in einfacher und verlässlicher Weise an der Pumpenwelle fixierbar ist.

Die Aufgabe der Erfindung wird durch die Merkmale der unabhängigen Ansprüche gelöst. Vorteilhafte Ausgestaltungen sind in den Unteransprüchen angegeben.

Demnach wird die Aufgabe gelöst durch eine Kreiselpumpe, insbesondere Bohrlochpumpe, mit
einer Pumpenwelle, einem Laufrad, einer Wellenhülse und einem Druckring, wobei
das Laufrad, die Wellenhülse und der Druckring auf der Pumpenwelle sitzen,
der Druckring an dem Laufrad befestigt ist, und
die Wellenhülse und der Druckring mit einem miteinander korrespondierenden Bajonettverschluss ausgestaltet sind.

Gegenüber aus dem Stand der Technik bekannten Kreiselpumpen, bei denen seit Dekaden die Wellenhülse für eine Mitnahme in Drehrichtung mittels einer Passfederverbindung und in axialer Richtung durch Verspannen mittels einer Verschraubung fixiert wurde, zeichnet sich die vorgeschlagene Lösung durch besondere Einfach- sowie Robustheit aus. Denn eine Verwendung einer Passfeder verursacht einen hohen Bearbeitungsaufwand sowohl für die Pumpenwelle als auch für das Laufrad. Entgegen allen Erwartungen hat sich experimentell gezeigt, dass sich durch den Bajonettversschluss zwischen der Wellenhülse und dem Druckring eine betriebssichere Verbindung realisieren lässt, die gleichzeitig ein kostengünstiges Herstellen der Pumpenwelle ohne Passfedern ermöglicht. Die vorgeschlagene Konstruktion ermöglicht eine betriebssichere Radiallagerung mittels der Wellenhülse bei gleichzeitig geringem Materialeinsatz. Mit anderen Worten erfolgt bei der vorgeschlagenen Lösung eine Fixierung der Wellenhülse mittels des Bajonettverschlusses in einem selbstsichernden Verbund. Ferner erlaubt die vorgeschlagene Kreiselpumpe eine Realisierung eines kleinstmöglichen Laufrad-Eintritts-Innendurchmesser zugunsten hoher hydraulischer Kennwerte, insbesondere eines hohen hydraulischen Wirkungsgrads der Kreiselpumpe.

Durch den Bajonettverschluss wird die Wellenhülse, auch Wellenschutzhülse oder Lagerhülse genannt, zusätzlich in Rotation versetzt und die Wellenhülse wird durch den Druckring geklemmt. Der Innendurchmesser der Wellenhülse kann H7/H6 passend zur Pumpenwelle betragen, während ein Außendurchmesser der Wellenhülse etwa 0.1, 0.2, 0.25, 0.3 oder mehr mm zu einem radialen Innendurchmesser eines Gummilagers eines Führungsgehäuse, wie beispielsweise ein Pumpengehäuse, beabstandet sein kann. Im Ergebnis ermöglicht die vorgeschlagene Kreiselpumpe eine einfache Montage und Demontage von Verschleißteilen wie der Wellenhülse oder dem Laufrad.

Grundsätzlich kann das Laufrad wie ein aus dem Stand der Technik bekanntes Laufrad gestaltet sein und weist, in Draufsicht, eine insbesondere kreisrunde Form auf. Die Begriffe axial und/oder radial sind bevorzugt auf eine Achse des Laufrads und/oder eine Achse, der das Laufrad antreibenden Pumpenwelle, bezogen. Die Wellenhülse ist bevorzugt hülsenartig, rohrförmig und/oder zylinderartig gestaltet, wobei die Pumpenwelle bevorzugt durch die Wellenhülse hindurchgeführt ist. Der Druckring ist bevorzugt scheibenartig gestaltet, wobei die Pumpenwelle bevorzugt durch eine Öffnung des Druckrings hindurchgeführt ist. Insofern bedeutet der Begriff auf der Pumpenwelle sitzen insbesondere, dass die Pumpenwelle durch das Laufrad, die Wellenhülse und den Druckring hindurchgeführt ist. Bevorzugt ist der Druckring axial zwischen der Wellenhülse und dem Laufrad angeordnet.

Als Bajonettverschluss wird im Allgemeinen eine schnell herstell- und lösbare mechanische Verbindung zweier zylindrischer Teile in ihrer Längsachse verstanden, vorliegend des Druckrings und der Wellenhülse. Dabei können die Teile, der Druckring und die Wellenhülse, durch Ineinanderstecken und entgegengesetztes Drehen verbunden und so auch wieder getrennt werden. Das Teil, das über das andere geschoben wird, die Wellenhülse, kann einen Längsschlitz besitzen, an dessen Ende sich rechtwinklig ein kurzer Querschlitz ansetzt. Das andere Teil, der Druckring, kann einen Knopf oder dergleichen besitzen, der in den Querschlitz eingeführt wird und derart die feste Verbindung bewirkt.

Als Kreiselpumpe wird im Allgemeinen eine Strömungsmaschine bezeichnet, die eine Drehbewegung und dynamische Kräfte zur Förderung überwiegend von Flüssigkeiten als Fluid nutzt. Neben einer tangentialen Beschleunigung des Fluids, auch Medium genannt, wird in radialer Strömung auftretende Fliehkraft zur Förderung genutzt, so dass Kreiselpumpen ebenso als Zentrifugalpumpen bezeichnet werden. Das Fluid umfasst bevorzugt Wasser oder ein sonstiges flüssiges Medium. Die Kreiselpumpe kann beispielsweise als Bohrlochpumpe gestaltet sein. Das Laufrad ist bevorzugt in einem Pumpengehäuse vorgesehen, dass durch einen in einem Motorgehäuse anordenbaren Motor antreibbar ist. Zwischen dem Motor und dem Laufrad ist bevorzugt die Pumpenwelle vorgesehen. Die Ausgestaltung des Motors, des Laufrads und/oder der Pumpenwelle kann wie aus dem Stand der Technik bekannt erfolgen.

Gegenüber einer Kreiselpumpe, wie sie beispielsweise bei Heizungen verwendet wird, zeichnet sich eine Bohrlochpumpe oftmals durch eine Mehrzahl, beispielsweise zwei, drei oder noch mehr, hintereinander geschalteter Laufräder aus, wodurch sich besonders hohe Förderhöhen realisieren lassen. Bohrlochpumpen, auch Unterwassermotorpumpen oder Vertikalpumpen genannt, lassen sich bevorzugt in enge Bohrlöcher oder Brunnen mit einem geringen Innendurchmesser einsetzen. Dazu weisen die Bohrlochpumpen bevorzugt ein zylinderartiges Gehäuse bzw. ist in Form eines Zylinders auf, welcher Zylinder in das Bohrloch einführbar ist. Neben Fluiden wie Wasser oder Abwasser lassen sich mit Bohrlochpumpen auch Erdöl fördern.

Gemäß einer bevorzugten Weiterbildung ist die Wellenhülse drehfest oder nicht drehfest mit der Pumpenwelle verbunden. Beispielsweise kann die Wellenhülse mit der Pumpenwelle verschweißt sein. Ebenso können sich der Wellenhülse und der Pumpenwelle eine Passfederverbindung vorgesehen sein. Darüber hinaus sind auch weitere Maßnahmen denkbar, wie die Wellenhülse drehfest an der Pumpenwelle fixierbar ist. Wenn beispielsweise die Wellenhülse drehfest mit der Pumpenwelle verbunden ist, kann das Laufrad mittels des Bajonettverschlusses in einfacher Weise von der Pumpenwelle abgenommen werden kann.

Nach einer anderen bevorzugten Ausgestaltung sind die Wellenhülse und der Druckring mittels des Bajonettverschlusses axial und drehfest miteinander verbindbar. Derart lässt sich insbesondere eine kraftschlüssige Verbindung zwischen der Wellenhülse und dem Druckring ausbilden, was einen verlässlichen Betrieb der Kreiselpumpe ermöglicht.

Gemäß einer anderen bevorzugten Weiterbildung ist der Bajonettverschluss durch wenigstens eine von dem Druckring radial nach innen hervorstehende Auskragung und durch wenigstens eine an der Wellenhülse radial nach innen reichende und zu der Auskragung korrespondierende Einkragung gebildet, welche Einkragung sich zunächst auf gleicher axialer Höhe um einen Teil der Wellenhülse herum erstreckt und in der Folge eine axial in Richtung des Druckrings abfallende Einkragungsausnehmung aufweist. Bevorzugt sind zwei gegenüber liegend angeordnete Auskragungen und entsprechende Einkragungen vorgesehen. Darüber hinaus ist auch möglich, dass beispielsweise vier, sechs oder acht Auskragungen und dazu korrespondierende Einkragungen vorgesehen sind, die insbesondere in regelmäßigen Abständen angeordnet sind.

Bevorzugt ist die Auskragung quaderartig gestaltet, erstreckt sich die Auskragung von dem Druckring radial in eine die Pumpenwelle aufnehmende Öffnung des Druckring hinein, ist die Auskragung an einem der Pumpenwelle entgegengesetzten Rand des Druckrings angeordnet, ist die Auskragung einteilig mit dem Druckring gestaltet oder an diesem ortsfest befestigt, beispielsweise mittels Kleben oder Schweißen, und/oder ist die Auskragung quaderartig gestaltet. Die Einkragung ist bevorzugt in die Wellenhülse eingefräst und/oder weist einen quaderartigen Querschnitt auf.

Die Einkragung kann sich zum Einführen der Auskragung zunächst axial weg von dem Laufrad erstrecken, um sich dann auf gleicher axialer Höhe um den Teil der Wellenhülse herum zu erstrecken. Die Einkragungsausnehmung ist bevorzugt seitlich sowie axial nach unten in Richtung des Laufrads durch die Wellenhöhe begrenzt. Durch Einführen der Auskragung in die Einkragung und entsprechendes Verdrehen, insbesondere entgegengesetztes Verdrehen, lässt sich die Auskragung in die Einkragungsausnehmung verbringen, sodass derart die Wellenhülse mit den Druckring axial als auch in Drehrichtung fixierbar ist. Daneben sind andere Ausgestaltungen für den Bajonettverschluss denkbar, wie aus dem Stand der Technik bekannt.

Nach einer anderen bevorzugten Ausgestaltung weist die Kreiselpumpe wenigstens ein Befestigungsmittel auf, welches axial durch den Druckring hindurch in das Laufrad eingeführt ist. Bevorzugt sind eine Mehrzahl Befestigungsmittel vorgesehen, beispielsweise vier, sechs oder acht Befestigungsmittel, die in regelmäßigen Abständen an dem Druckring, insbesondere um die Wellenhülse herum angeordnet sind. Bevorzugt ist das Befestigungsmittel als Schraube ausgeführt, insbesondere als metrische Schraube, für die besonders bevorzugt in dem Laufrad ein korrespondierendes Gewinde vorgesehen ist. Durch Befestigen des Druckrings an dem Laufrad mittels des Befestigungsmittels lässt sich die zuvor in die Einkragungsausnehmung verbrachte Auskragung ortsfest in der Einkragungsausnehmung fixieren, wodurch die Wellenhülse dreh- und/oder ortsfest an dem Laufrad fixiert wird.

Gemäß einer anderen bevorzugten Weiterbildung ist die Wellenhülse mit dem Druckring axial insbesondere spielfrei oder mit Spiel bewegungsgekoppelt. Eine derartige spielfreie oder spielbehaftete Bewegungskopplung lässt sich durch entsprechende Dimensionierung und/oder Anordnung des Bajonettverschlusses bzw. der Auskragung und/oder Einkragungsausnehmung erreichen. Optional ist der Bajonettverschluss bzw. die Auskragung und/oder Einkragungsausnehmung derart dimensioniert und/oder angeordnet, dass nach nicht vollständigem Lösen des Befestigungsmittel von dem Laufrad die Wellenhülse aus dem Druckring entnehmbar ist.

Nach einer anderen bevorzugten Ausgestaltung weist die Kreiselpumpe eine auf dem Laufrad sitzende Spannhülse auf, die radial zwischen der Pumpenwelle und dem Laufrad angeordnet ist. Die Spannhülse ist bevorzugt hülsenartig und/oder rohrförmig gestaltet, wobei wenigstens ein seitlicher Schlitz vorgesehen sein kann, sodass die Spannhülse insbesondere an ihrem oberen Ende dem Laufrad zugewandten Ende radial komprimierbar ist. Bevorzugt sitzt die Spannhülse derart auf der Pumpenwelle, dass das Laufrad axial unterhalb und die Wellenhülse axial oberhalb vorgesehen ist.

Gemäß einer anderen bevorzugten Weiterbildung ist der Druckring mit der Spannhülse axial insbesondere spielfrei oder mit Spiel bewegungsgekoppelt. Bevorzugt weist der Druckring dazu einen unteren radial nach innen reichenden Bund auf, in denen eine entsprechende Ausnehmung, die an einem oberen Ende der Spannhülse vorgesehen ist, radial umlaufend eingreift. Entsprechend kann durch Komprimieren des oberen Endes der Spannhülse diese mit ihrer Ausnehmung in den Bund eingeführt werden, sodass durch Dekomprimieren die Ausnehmung mit dem Bund verrastet. Bevorzugt liegt der Druckring und/oder der Bund axial auf der Spannhülse und/oder der Ausnehmung der Spannhülse insbesondere berührend auf. Die Spannhülse ist bevorzugt, ebenso wie der Druckring, das Laufrad, die Pumpenwelle und/oder die Wellenhülse, aus einem Metall ausgeführt, wobei grundsätzlich auch andere Werkstoffe denkbar sind.

Gemäß einer anderen bevorzugten Weiterbildung verjüngt sich die Spannhülse axial weg von dem Druckring in ihrem radialen Durchmesser. Alternativ kann die Spannhülse auch einen gleich groß bleibenden Durchmesser aufweisen. Nach einer anderen bevorzugten Ausgestaltung weist das Laufrad eine der Pumpenwelle zugewandte Ausnehmung für die Spannhülse auf und verjüngt sich insbesondere die Ausnehmung axial weg von dem Druckring in ihrem radialen Durchmesser. Alternativ kann die Ausnehmung auch einen gleich groß bleibenden Durchmesser aufweisen. Sofern jedoch wenigstens die Spannhülse oder die Ausnehmung den sich verjüngenden Durchmesser aufweisen, entsteht beim Befestigen des Befestigungsmittel eine radiale Kraft zwischen der Pumpenwelle und dem Laufrad, wodurch das Laufrad drehfest an der Pumpenwelle fixiert wird.

Die Aufgabe der Erfindung wird weiterhin gelöst durch eine Bohrlochpumpe mit einer Mehrzahl axial übereinander an der Pumpenwelle angeordneten Laufrädern, Wellenhülsen und Druckringen gemäß der zuvor beschriebenen Kreiselpumpe. Ein solche Bohrlochpumpe weist insofern bevorzugt eine Mehrzahl axial übereinander an der Pumpenwelle angeordneter Laufräder mit einer jeweiligen Wellenhülse und einem jeweiligen Druckring auf, wobei das jeweilige Laufrad, die jeweilige Wellenhülse und der jeweilige Druckring auf der Pumpenwelle sitzen, der jeweilige Druckring an dem jeweiligen Laufrad befestigt ist, und die jeweilige Wellenhülse und der jeweilige Druckring mit einem miteinander korrespondierenden jeweiligen Bajonettverschluss ausgestaltet sind.

Weitere Ausgestaltungen und/oder Vorteile der Bohrlochpumpe ergeben sich für den Fachmann analog zu der zuvor beschriebenen Kreiselpumpe.

### Kurze Beschreibung der Zeichnungen

Nachfolgend wird die Erfindung unter Bezugnahme auf die anliegenden Zeichnungen anhand bevorzugter Ausführungsbeispiele näher erläutert.

In den Zeichnungen zeigen
- Fig. 1: eine schematisch perspektivische Ansicht einer Pumpenwelle, eines Laufrads, einer Wellenhülse, einer Spannhülse und eines Druckring einer Kreiselpumpe gemäß einem bevorzugten Ausführungsbeispiel der Erfindung,
- Fig. 2: eine schematische Schnittansicht der Pumpenwelle, des Laufrads, der Wellenhülse, einer Spannhülse und des Druckring der Kreiselpumpe gemäß dem bevorzugten Ausführungsbeispiel der Erfindung gemäß Fig. 1, und
- Fig. 3: eine schematisch perspektivische Explosionsansicht der Pumpenwelle, des Laufrads, der Wellenhülse, einer Spannhülse und des Druckring der Kreiselpumpe gemäß dem bevorzugten Ausführungsbeispiel der Erfindung gemäß Fig. 1.

### Detaillierte Beschreibung der Ausführungsbespiele

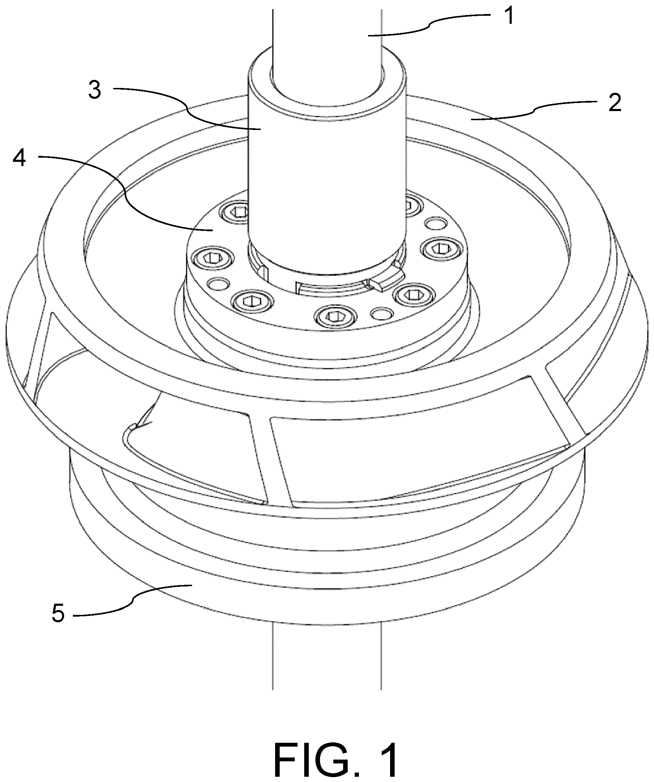

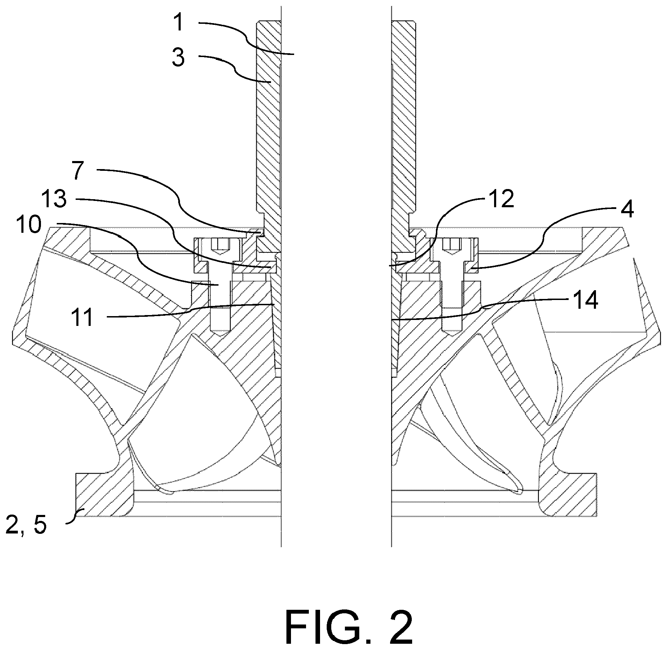

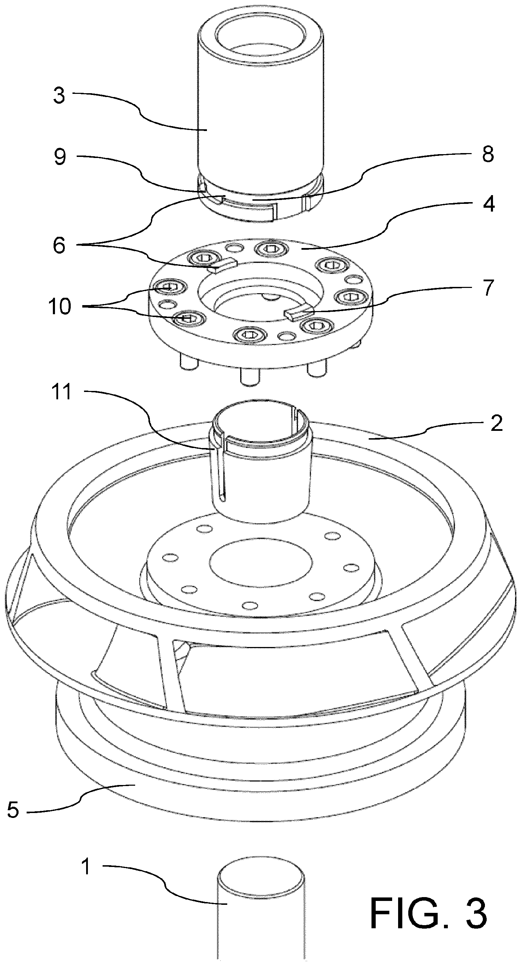

Fig. 1 zeigt eine schematisch perspektivische Ansicht einer Pumpenwelle 1, eines Laufrads 2, einer Wellenhülse 3 und eines Druckring 4 einer Kreiselpumpe, insbesondere als Teil einer Bohrlochpumpe, gemäß einem bevorzugten Ausführungsbeispiel der Erfindung. Fig. 2 zeigt eine korrespondierende Schnittansicht der Fig. 1, während Fig. 3 eine korrespondierende Explosionsansicht der Fig. 1 zeigt.

Die Bohrlochpumpe weist ein sich längs erstreckendes rohrartiges Pumpengehäuse auf, nicht gezeigt. In dem Pumpengehäuse ist die sich längs erstreckende, eine Längsachse definierende Pumpenwelle 1 vorgesehen, auf der zwei beabstandet voneinander angeordnete Laufräder 2 sitzen, wobei in den Figs. nur ein Laufrad gezeigt ist, jedoch auch weitere Laufräder 2 möglich sind. Die Laufräder 2 werden durch einen nicht gezeigten Motor angetrieben, der mittels einer Kupplung oder alternativ direkt mit der Pumpenwelle verbunden ist. Im Bereich der Kupplung unterhalb des unteren Laufrad 2 können außen, sich an dem Pumpengehäuse axial erstreckende Einlässe für durch die Bohrlochpumpe zu förderndes Fluids vorgesehen. Das derart in das Pumpengehäuse eintretende Fluid wird zunächst durch das untere Laufrad 2 und in der Folge durch das obere Laufrad 2 gefördert, um dann an einem oberen nicht gezeigten Ende des Pumpengehäuses aus der Bohrlochpumpe auszutreten.

Zurückkommend auf Figs. 1 bis 3 sitzt das Laufrad 2 auf der Pumpenwelle 1, welche durch eine Öffnung des Laufrades 2 durch dieses hindurchgeführt ist. Saugseitig in den Figuren unten ist das in Draufsicht kreisförmige Laufrad 2 durch einen das Laufrad 2 radial umschließenden, mit dem Laufrad 2 einstückig geformten Laufring 5 begrenzt. Oberhalb des Laufrades 2 ist zunächst der scheibenartige Druckring 4 vorgesehen, durch dessen Öffnung die Pumpenwelle 1 geführt ist. Noch weiter oberhalb ist die rohrförmige Wellenhülse 3 angeordnet, durch welche ebenso die Pumpenwelle 1 geführt ist.

Wie am besten aus der Explosionsansicht der Fig. 3 zu erkennen, sind die Wellenhülse 3 und der Druckring 4 mit einem miteinander korrespondierenden Bajonettverschluss 6 ausgestaltet sind. An dem Druckring 4 ist der Bajonettverschluss 6 durch zwei sich von dem Druckring 4 radial nach innen in die Öffnung des Druckrings 4 hin erstreckende, quaderartige Auskragungen 7 gestaltet, die gegenüberliegend angeordnet sind. Alternativ können eine Mehrzahl Auskragungen 7 vorgesehen sein, die insbesondere in regelmäßigen Abständen um die Öffnung herum angeordnet sind, und/oder eine andere Form aufweisen können. Die Auskragungen 7 können einstückig mit dem Druckring 4 gestaltet oder an diesen aufgebracht sein, beispielsweise durch Schweißen und Kleben.

An der metallenen Wellenhülse 3 sind korrespondierend zu den Auskragungen 7 zwei gegenüberliegend angeordnete Einkragungen 8 vorgesehen, die in die Wellenhülse 3 ein gefräst sind. Die Einkragungen 8 erstrecken sich nach Art eines Bajonettverschlusses zunächst axial von dem Laufrad 2 weg, um sich in der Folge auf gleicher axialer Höhe um einen Teil der Wellenhülse 3 herum zu erstrecken und weisen schließlich eine axial in Richtung des Laufrads 2 abfallende Einkragungsausnehmung 9 auf, in die die jeweilige Auskragung 7 eingleiten kann. Derart lassen sich die Wellenhülse 3 und der Druckring 4 mittels des Bajonettverschlusses 6 axial und drehfest miteinander verbinden.

Der Druckring 4 ist mittels einer Mehrzahl Befestigungsmittel 10, die vorliegend als Schrauben ausgeführt sind, drehfest mit dem Laufrad 2 verbunden. Die 8 Schrauben sind in regelmäßigen Abständen durch den Druckring 4 hindurch in entsprechende in dem Laufrad 2 vorgesehene Gewinde eingeschraubt.

Das Laufrad 2 kann über die Wellenhülse 3 entweder drehfest mit dem Pumpenwelle 1 verbunden sein, beispielsweise kann die Wellenhülse 3 mit der Pumpenwelle 1 verschweißt sein, was in den Figs. nicht gezeigt ist. Vorliegend ist zum drehfesten Verbinden eine auf dem Laufrad 2 sitzende Spannhülse 11 vorgesehen, wie in Fig. 3 gezeigt. Die Spannhülse 11 ist rohrartig gestaltet, wobei gegenüberliegend zwei in die Spannhülse 11 eingefügte, sich axial erstreckende Schlitze vorgesehen sind, so dass die Spannhülse 11 an ihrem oberen dem Druckring 4 zugewandten Ende radial komprimierbar ist.

Die Spannhülse 11 ist, wie insbesondere aus Fig. 2 zu erkennen, radial zwischen der Pumpenwelle 1 und dem Laufrad 2 angeordnet. An dem oberen Ende greift eine radial nach außen orientierte U-Formartige Spannhülsenausnehmung 12 in einen radial nach innen orientierten unteren kreisrunden Bund 13 des Druckrings 4 ein. In diesem Bund 13 ist die Spannhülse 11 zuvor radial komprimiert in axialer Richtung eingeführt worden, sodass nach dem Komprimieren die U-Formartige Spannhülsenausnehmung 12 den Bund 13 radial umschließt. Der U-Formartige Spannhülsenausnehmung 12 und der Bund 13 sind derart dimensioniert, dass der Druckring 4 mit der Spannhülse 11 axial mit einem Spiel von 1 bis 2 mm bewegungsgekoppelt ist. Wird der Druckring 4 von dem Laufrad 2 axial abgezogen, dann wird ebenso die Spannhülse 11 axial mit abgezogen.

Wie zuvor angesprochen, ist die Spannhülse 11 radial zwischen der Pumpenwelle 1 und dem Laufrad 2 angeordnet. Konkret ist die Spannhülse 11 in dem Laufrad 2 in einer der Pumpenwelle 1 zugewandten Ausnehmung 14 angeordnet. Sowohl die Ausnehmung 14 als auch die Spannhülse 11 verjüngen sich axial weg von dem Druckring 4 in Richtung des Laufrings 5 in ihrem jeweiligen radialen Durchmesser. Da der Druckring 4 mit seinem Bund 13 axial auf der U-Formartigen Spannhülsenausnehmung 12 aufliegt, führt ein Einschrauben der als Schrauben ausgestalteten Befestigungsmittel 10 dazu, dass die konusartig gestaltete Spannhülse 11 axial in Richtung des Laufrings 5 verschoben wird. Die dadurch entstehende sowohl auf die Pumpenwelle 1 sowie das Laufrad 2 wirkende axiale Presskraft fixiert das Laufrad 2 drehfest an der Pumpenwelle 1.

In dem in Fig. 2 gezeigten Zustand, in dem als Schrauben ausgestalteten Befestigungsmittel 10 in das Laufrad ein geschraubt sind, liegen die Auskragungen 7 axial berührend auf den Einkragungen 8 bzw. den Einkragungsausnehmungen 9 auf. Ferner liegt die Wellenhülse 3 mit ihrem axialen unteren Ende berührend auf der Spannhülse 11 auf sowie der Bund 13 berührend auf der Spannhülsenausnehmung 12 bzw. der Spannhülse 11 auf. Da der Druckring 4 mit der Spannhülse 11 axial mit einem Spiel von 1 bis 2 mm bewegungsgekoppelt ist, ist entsprechend auch die Wellenhülse 3 mit dem Druckring 4 axial mit Spiel bewegungsgekoppelt.

Die beschriebenen Ausführungsbeispiels sind lediglich Beispiele, die im Rahmen der Ansprüche auf vielfältige Weise modifiziert und/oder ergänzt werden können. Jedes Merkmal, das für ein bestimmtes Ausführungsbeispiel beschrieben wurde, kann eigenständig oder in Kombination mit anderen Merkmalen in einem beliebigen anderen Ausführungsbeispiel genutzt werden. Jedes Merkmal, dass für ein Ausführungsbeispiel einer bestimmten Kategorie beschrieben wurde, kann auch in entsprechender Weise in einem Ausführungsbeispiel einer anderen Kategorie eingesetzt werden.

### Bezugszeichenliste

| | |
|---|---|
| Pumpenwelle | 1 |
| Laufrad | 2 |
| Wellenhülse | 3 |
| Druckring | 4 |
| Laufring | 5 |
| Bajonettverschlusses | 6 |
| Auskragung | 7 |
| Einkragung | 8 |
| Einkragungsausnehmungen | 9 |
| Befestigungsmittel | 10 |
| Spannhülse | 11 |
| Spannhülsenausnehmung | 12 |
| Bund | 13 |
| Ausnehmung | 14 |

## Patentansprüche

1. Kreiselpumpe, insbesondere Bohrlochpumpe, mit
einer Pumpenwelle (1), einem Laufrad (2), einer Wellenhülse (3) und einem Druckring (4), wobei
das Laufrad (2), die Wellenhülse (3) und der Druckring (4) auf der Pumpenwelle (1) sitzen,
der Druckring (4) an dem Laufrad (2) befestigt ist, und
die Wellenhülse (3) und der Druckring (4) mit einem miteinander korrespondierenden Bajonettverschluss (6) ausgestaltet sind.

2. Kreiselpumpe nach dem vorhergehenden Anspruch, wobei die Wellenhülse (3) drehfest oder nicht drehfest mit der Pumpenwelle (1) verbunden ist.

3. Kreiselpumpe nach einem der vorhergehenden Ansprüche, wobei die Wellenhülse (3) und der Druckring (4) mittels des Bajonettverschlusses (6) axial und drehfest miteinander verbindbar sind.

4. Kreiselpumpe nach einem der vorhergehenden Ansprüche, wobei der Bajonettverschluss (6) durch wenigstens eine von dem Druckring (4) radial nach innen hervorstehende Auskragung (7) und durch wenigstens eine an der Wellenhülse (3) radial nach innen reichende und zu der Auskragung (7) korrespondierende Einkragung (8) gebildet ist, welche Einkragung (8) sich zunächst auf gleicher axialer Höhe um einen Teil der Wellenhülse (3) herum erstreckt und in der Folge eine axial in Richtung des Druckrings (4) abfallende Einkragungsausnehmung (9) aufweist.

5. Kreiselpumpe nach einem der vorhergehenden Ansprüche, mit wenigstens einem Befestigungsmittel (10), welches axial durch den Druckring (4) hindurch in das Laufrad (2) eingeführt ist.

6. Kreiselpumpe nach einem der vorhergehenden Ansprüche, wobei die Wellenhülse (3) mit dem Druckring (4) axial insbesondere spielfrei oder mit Spiel bewegungsgekoppelt ist.

7. Kreiselpumpe nach einem der vorhergehenden Ansprüche, mit einer auf dem Laufrad (2) sitzenden Spannhülse (11), die radial zwischen der Pumpenwelle (1) und dem Laufrad (2) angeordnet ist.

8. Kreiselpumpe nach dem vorhergehenden Anspruch, wobei sich die Spannhülse (11) axial weg von dem Druckring (4) in ihrem radialen Durchmesser verjüngt.

9. Kreiselpumpe nach einem der zwei vorhergehenden Ansprüche, wobei das Laufrad (2) eine der Pumpenwelle (1) zugewandte Ausnehmung (14) für die Spannhülse (11) aufweist und insbesondere die Ausnehmung (14) axial weg von dem Druckring (4) in ihrem radialen Durchmesser verjüngt.

10. Kreiselpumpe nach einem der drei vorhergehenden Ansprüche, wobei der Druckring (4) mit der Spannhülse (11) axial insbesondere spielfrei oder mit Spiel bewegungsgekoppelt ist.

11. Bohrlochpumpe mit einer Mehrzahl axial übereinander an der Pumpenwelle (1) angeordneten Laufrädern (2), Wellenhülsen (3) und Druckringen (4) gemäß einer Kreiselpumpe nach einem der vorhergehenden Ansprüche.
